Europäisches Patentamt

European Patent Office

Office européen des brevets

(19)

(11) **EP 0 762 247 B1**

(12) **EUROPÄISCHE PATENTSCHRIFT**

(45) Veröffentlichungstag und Bekanntmachung des Hinweises auf die Patenterteilung:
**08.11.2000 Patentblatt 2000/45**

(51) Int Cl.7: **G05B 19/401**

(21) Anmeldenummer: **96111910.4**

(22) Anmeldetag: **24.07.1996**

(54) **Koordinatenmessgerät mit einer Steuerung, die den Tastkopf des Messgeräts nach Solldaten verfährt**

Coordinate measuring machine with a controller that moves the probe of the measuring apparatus in accordance with reference date

Appareil de mesure de coordonnées avec une commande qui déplace le palpeur de l'appareil de mesure suivant des données des valeurs de consigne

(84) Benannte Vertragsstaaten:
**DE FR GB IT**

(30) Priorität: **11.08.1995 DE 19529574**

(43) Veröffentlichungstag der Anmeldung:
**12.03.1997 Patentblatt 1997/11**

(73) Patentinhaber:
• **Carl Zeiss**
**89518 Heidenheim (Brenz) (DE)**
Benannte Vertragsstaaten:
**DE FR IT**
• **Carl-Zeiss-Stiftung trading as Carl Zeiss**
**89518 Heidenheim (Brenz) (DE)**
Benannte Vertragsstaaten:
**GB**

(72) Erfinder: **Ruck, Otto**
**73479 Ellwangen-Pfalheim (DE)**

(56) Entgegenhaltungen:
**EP-A- 0 569 694**

• **AT AUTOMATISIERUNGSTECHNIK, Bd. 39, Nr. 3, März 1991, MÜNCHEN,DE, Seiten 92-97, XP000217740 DETLEF CLASSE: "Selektive Kraft- und Positionsregelung bei sensorgestützter Roboterprogrammierung"**

EP 0 762 247 B1

**Beschreibung**

Zur koordinatenmäßigen Vermessung von Werkstückoberflächen mit einem messenden Tastkopf, der diese im kontinuierlichen Kontakt im sogenannten "Scanning"-Verfahren abtastet, werden spezielle Steuerungen benötigt, die dafür sorgen, daß der Tastkopf auf der gewünschten Abtastbahn geführt wird. In der US-PS 4,769,763 ist eine Steuerung beschrieben, die das selbständige Abfahren unbekannter Werkstückkonturen erlaubt, indem der Absolutwert der Abtastgeschwindigkeit und die gewünschte Tasterauslenkung vorgegeben werden und aus der gemessenen Tasterauslenkung die tangential zur Werkstückoberfläche verlaufende Richtung der Abtastbewegung nachberechnet wird. Diese Steuerung arbeitet relativ langsam, da die Vorschubrichtung permanent aufs Neue aus den Signalen berechnet werden muß, die die Auslenkung des Taststifts beschreiben.

Aus der deutschen Patentschrift DE 42 12 455 C2 und der dazu korrespondierenden US-Patentschrift 5,471,406 ist eine Steuerung bekannt, die den Tastkopf des Koordinatenmeßgeräts nach Solldaten auf einer vorgegebenen Bahn verfährt, die im wesentlichen der Sollgeometrie der zu vermessenden Werkstückoberfläche entspricht. Da hier davon ausgegangen wird, daß die abzufahrende Bahn bereits innerhalb des zulässigen Auslenkungsbereiches des Taststifts genau bekannt ist, kann die Werkstückoberfläche mit relativ hoher Geschwindigkeit abgefahren werden, was sich gegenüber dem eingangs genannten Stand der Technik in einer drastischen Verkürzung der Meßzeit äußert. Probleme treten jedoch dann auf, wenn die tatsächliche Werkstückgeometrie in einem Ausmaß von der Sollgeometrie abweicht, das größer als die zulässige Auslenkung des Taststifts ist. Zwar besitzt die bekannte Steuerung eine Einrichtung zur Korrektur der Bahn, wenn sich die Auslenkung des Taststifts im Zuge der Abtastbewegung den Grenzen ihres Meßbereichs nähert. Die Bahndaten werden in einem solchen Falle um einen konstanten Betrag von der Werkstückoberfläche weg versetzt. Hiermit lassen sich jedoch nur relativ "gutmütige" Abweichungen zwischen Soll- und Istgeometrie abfangen.

Es ist deshalb das Ziel der vorliegenden Erfindung eine Steuerung für Koordinatenmeßgeräte zu schaffen, mit der sich Werkstückoberflächen auch dann noch schnell abtasten lassen, wenn größere Abweichungen zwischen Soll- und Istgeometrie auftreten oder für den Fall, daß die Lage des Werkstücks vor der Messung nicht ganz exakt bestimmt worden ist.

Diese Aufgabe wird gemäß der vorliegenden Erfindung dadurch gelöst, daß die Einrichtung zur Korrektur der Bahn ein mindestens zweistufiger Regler ist, wobei die erste Regelstufe auf ein der Auslenkung des beweglichen Taststifts proportionales Regelsignal arbeitet und die zweite Regelstufe aktiv wird, wenn die Auslenkung oder die auf das Werkstück wirkende Kraft einen vorbestimmten Betrag überschritten hat.

Die erfindungsgemäße Lösung vereinigt die Vorteile der beiden unterschiedlichen eingangs zum Stand der Technik genannten Steuerungen, indem sie nämlich sowohl relativ hohe Abtastgeschwindigkeiten erlaubt als auch größere Abweichungen zwischen der Soll- und der Istgeometrie toleriert. Erreicht wird das dadurch, daß zwar nach wie vor der Tastkopf entsprechend dem Solldaten auf einer vorgegebenen Bahn verfahren wird, gleichzeitig jedoch die Bahndaten während der Abtastbewegung entsprechend einer sich abzuzeichnen beginnenden Auslenkung des Taststift modifiziert werden.

Ein erfindungsgemäßes Koordinatenmeßgerät kann wie folgt aufgebaut sein:

Koordinatenmeßgerät mit einer Steuerung, die den Tastkopf des Koordinatenmeßgeräts nach Solldaten auf einer vorgegebenen Bahn verfährt, die im wesentlichen der Sollgeometrie der zu vermessenden Werkstückoberfläche entspricht, und eine Einrichtung zur Korrektur der Bahn besitzt, dadurch gekennzeichnet, daß die Einrichtung ein mindestens zweistufiger Regler ist, wobei die erste Regelstufe auf ein der Auslenkung des beweglichen Taststifts proportionales Regelsignal arbeitet und die zweite Regelstufe (28) nur dann aktiv wird, wenn die Auslenkung des Taststifts oder die auf das Werkstück wirkende Kraft einen vorbestimmten Betrag erreicht hat.

Es ist zweckmäßig, wenn die Solldaten nicht nur aus Punkten bestehen, deren Koordinaten von der Steuerung angefahren werden, sondern auch vorgegebene Normalenvektoren beinhalten, die die Orientierung der Werkstückoberfläche beschreiben. In einem solchen Falle läßt sich die erste Regelstufe so ausrichten, daß nur die in Richtung des jeweiligen Normalenvektors auftretende Regelabweichung berücksichtigt und ausgeregelt wird. Das hat zur Folge, daß die Tastkugel beim Abfahren der vorgegebenen Bahn, wenn sie sich nicht in einem vorgegebenen Sollpunkt befindet, dann allenfalls eine Ablage in Richtung der Flächennormalen besitzt, d.h. die einzelnen Punkte der Folge der Solldaten werden in Normalenrichtung vor die tatsächliche Werkstückoberfläche verlagert, falls die Sollbahn einmal in die Werkstückoberfläche "hineinlaufen" sollte.

Die zweite Regelstufe regelt vorteilhaft die in Richtung der Tasterauslenkung auftretende Regelabweichung aus. Auf diese Weise können auch unverhofft vorstehende Kanten und Ecken umfahren werden, gegen die der Taststift andernfalls ohne Vorwarnung ungebremst fahren würde, was einer Kollision gleichkäme, bei der der Taststift abbricht.

Weitere Vorteile ergeben sich aus der nachfolgenden Beschreibung von Ausführungsbeispielen anhand der Figuren 1-4 der beigefügten Zeichnungen.

Fig. 1a      ist ein Blockschaltbild, das wesentliche Teile der Steuerung eines Koordinatenmeßgeräts zeigt, die nach der Erfindung arbeitet;

Fig. 1b     ist eine ausführlichere Darstellung des Reglers (26) aus Figur 1a;

Fig. 1c     ist das Blockschaltbild einer alternativen Ausführungsform für den Regler (26) nach Figur 1a und Figur 1b;

Fig. 2     ist eine Skizze, in der die vorgegebene Abtastbahn und die reale Oberfläche eines Werkstücks während der Abtastbewegung durch den Taststift des Tastkopfes (2) aus Figur 1 dargestellt sind;

Fig. 3     ist ein Schnitt durch eine Werkstückoberfläche in einer Ebene, die die Abtastbahn enthält und erläutert die Wirkungsweise der zweiten Regelstufe des Reglers nach Figur 1b;

Fig. 4     ist ein Flußdiagramm, das die Arbeitsweise des Reglers (26) aus Figur 1b verdeutlicht.

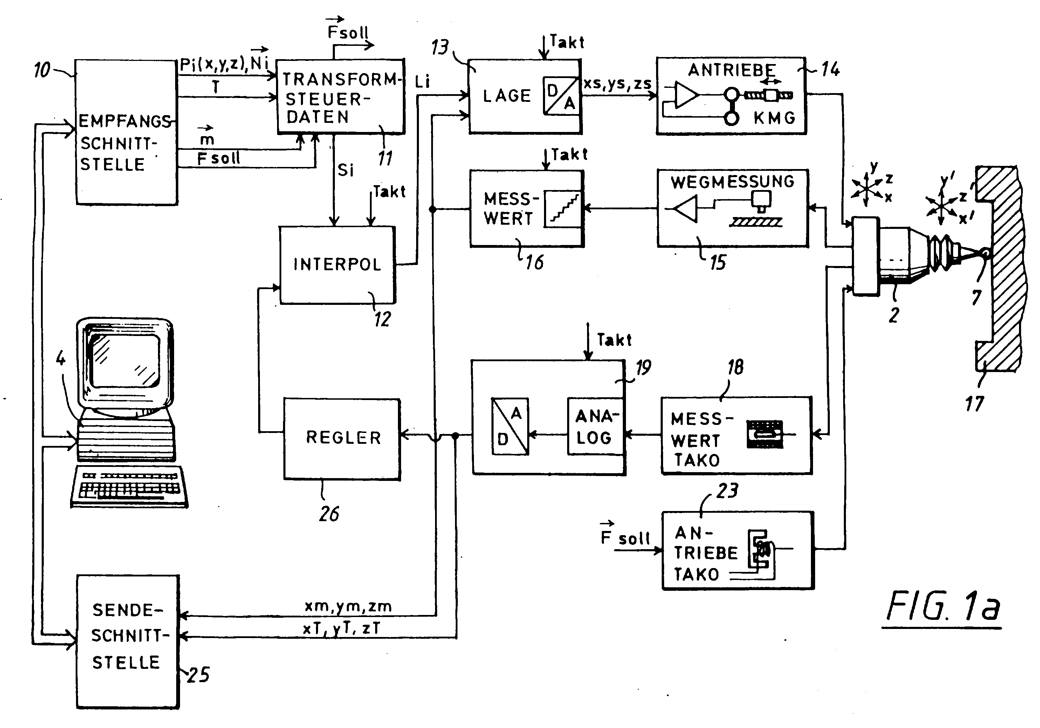

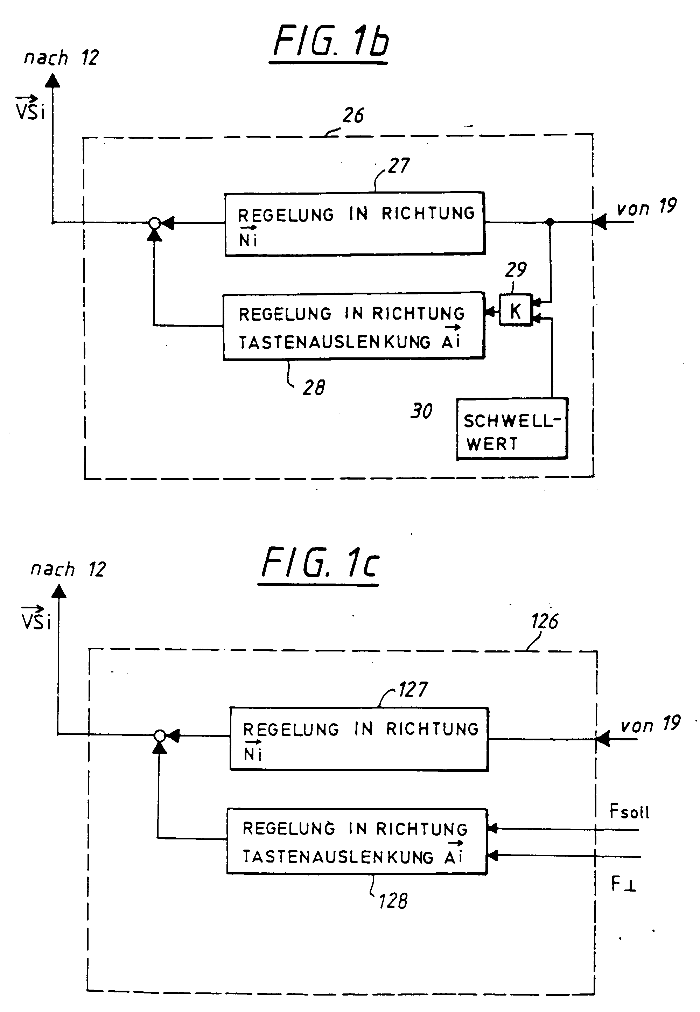

Die in Figur 1 mit ihren wesentlichen Funktionsbaugruppen beschriebene Steuerung eines Koordinatenmeßgerätes ist über die Empfangsschnittstelle (10) und die Sendeschnittstelle (25) mit dem Auswerterechner (4) des hier nicht in allen Einzelheiten dargestellten Koordinatenmeßgerätes verbunden. Über die Empfangsschnittstelle (10) werden vom Rechner u.a. folgende Daten an die Steuerung übergeben:

a) Die Transformationsmatrix T, die die Lage des Werkstückkoordinatensystems (WKS) im Maschinenkoordinatensystems (MKS) des Koordinatenmeßgeräts beschreibt;

b) der Vektor $\vec{m}$, der die Ablage des Mittelpunkts der verwendeten Tastkugel im Maschinenkoordinatensystem von einem Bezugspunkt am Tastkopf (2) des Koordinatenmeßgeräts beschreibt;

c) der Betrag der Meßkraft (Fsoll), die der Taster auf das Werkstück ausüben soll.

Außerdem werden über die Empfangsschnittstelle (10) die Informationen übergeben, die zur Beschreibung der von der Tastkugel abzufahrenden Sollkontur erforderlich sind. Das sind beispielsweise Punktefolgen Pi(x, y, z). Gleichzeitig können auch soweit vorhanden, die den einzelnen Punkten Pi(x, y, z) zugeordneten Normalenvektoren (Ni) auf die Oberfläche des zu vermessenden Werkstücks (17) an dieser Stelle übergeben werden.

Das wichtigste Bauelement der Steuerung in Figur 1 sind ein oder mehrere Mikroprozessoren. Demzufolge sind einige der in Figur 1 gezeichneten Funktionsbaugruppen nicht in Hardware realisiert, sondern Teil der Firmware dieser Mikroprozessoren. Das gilt beispielsweise auch für die auf die Empfangsschnittstelle (10) folgende Funktionsbaugruppe (11) mit der Bezeichnung "Transformation Steuerdaten". Die Funktionsbaugruppe (11) berechnet aus den erhaltenen Informationen die Bahndaten, mit denen die Tastkugel (7) gegenüber dem Werkstück (17) verfahren wird. Diese Bahndaten (Si) werden durch eine Koordinatentransformation in das Steuersystem, d.h. das Maschinenkoordinatensystem (MKS) übertragen.

In der Funktionsbaugruppe (12) "Interpolation" werden im steuereigenen Systemtakt die aufbereiteten diskreten abzufahrenden Bahnpunkte (Si) nach einem vorgegebenen Algorithmus, beispielsweise linear oder nach einem Spline-Algorithmus interpoliert und Lagesollwerte (Li) an den nachgeordneten Lageregler (13) für die Antriebe der drei Meßachsen des Koordinatenmeßgerät übergeben.

Die im Lageregler (13) erzeugten Lagesollwerte werden anschließend analog gewandelt und als analoge Stellgrößen an die drei Antriebe (14) für die x-, y-, und z-Achse des Koordinatenmeßgerätes übergeben. Ebenfalls an den Lageregler (13) angeschlossen sind die mit (15) bezeichneten Wegmeßsysteme des Koordinatenmeßgeräts und zwar über die Funktionsbaugruppe "Meßwerterfassung" (16). Diese Baugruppe sorgt für eine zyklische Erfassung der Positionen des Tastkopfs (2) im Maschinenkoordinatensystem (MKS) und schließt den Positionsregelkreis für die drei Meßachsen des Koordinatenmeßgeräts.

Die Steuerung nach Figur 1 enthält ebenfalls die Elektronik (18) zur Weiterverarbeitung der von den Meßwertgebern im Tastkopf (2) abgegebenen Signale, die das Auslenken des Taststifts beim Kontakt der Tastkugel (7) mit dem Werkstück (17) in den drei Raumrichtungen beschreiben. Die von diesen Meßwertgebern kommenden und in der Elektronik (18) aufbereiteten Lagesignale werden in der Funktionsbaugruppe (19) in Digitalwerte gewandelt. Diese digitalen Ausgangswerte (xT, yT, zT) sind ebenso wie die Koordinatenmeßwerte (xm, ym, zm) aus den Wegmeßeinrichtungen für die Meßschlitten des Gerätes auf die Sendeschnittstelle (25) gelegt und werden vom Rechner (4) zur Berechnung des Meßergebnisses benötigt.

Die Steuerung nach Figur 1 enthält außerdem die Antriebe für die Auslenkung des Taststifts im Tastkopf (2). Diese bestehen aus Kraftgeneratoren wie z.B. Linearmotoren oder Tauchspulenmagnete. Die Antriebe lenken den Taststift auf ein vorgegebenes Signal hin in den drei Raumrichtungen (x, y, z) aus. Die entsprechende Funktionsgruppe (23) "Antriebe Tako" erhält die Information über Betrag und Richtung der einzustellenden Meßkraft ($\vec{F}$ soll) ebenfalls von der Funktionsbaugruppe (11), die diese Information aus der übergebenen Information über den Betrag der Meßkraft und aus den Normalenvektoren ($\vec{Ni}$) generiert. Im beschriebenen Falle wird die Richtung der Meßkraft ($\vec{F}$ soll) stets in Richtung der Flächennormalen ($\vec{Ni}$) vorgegeben.

Weitere Informationen über die beschriebene Steuerung finden sich in der eingangs genannten DE-PS 42 12 455 sowie der US-PS 5,471,406 der Anmelderin, auf die an dieser Stelle ausdrücklich Bezug genommen wird.

Mit der bis hier beschriebenen Steuerung lassen sich nur Werkstückoberflächen abfahren, die innerhalb des zulässigen Auslenkbereiches des Taststifts mit der vorgegebenen Sollgeometrie übereinstimmen, auf die sich die Bahndaten beziehen. Um diese Einschränkung zu beseitigen, ist ein Regler (26) vorgesehen, der das digitale, die Tasterauslenkung beschreibende Signal der Baugruppe (19) erhält. Dieser Regler (26) ist ebenfalls in die Firmware des Mikroprozessors der Steuerung integriert und arbeitet wie nachfolgend noch beschrieben wird.

Aus der detaillierteren Darstellung des Reglers (26) nach Figur 1b geht hervor, daß dieser zweistufig aufgebaut ist. In der ersten Stufe (27) der der Regelung wird das Signal der Funktionsbaugruppe (19) in ein Regelsignal gewandelt, das in Richtung der Flächennormalen ($\vec{N}i$) des nächsten anzufahrenden Stützpunktes (Si) zeigt. Dabei wird so vorgegangen, daß nur der in Richtung der Flächennormalen wirksame Anteil der Tasterauslenkung (Ai) verwendet und weiterverarbeitet wird und die davon abweichenden Komponenten gelöscht werden. Um diesen so berechneten Betrag wird nun der nächste anzufahrende Punkt ($\vec{S}i$) von der Werkstückoberfläche weg verlagert, d.h. die Koordinaten dieses Punktes werden in Richtung der Regelgröße ($\vec{VS}i$) verschoben. Eine Verschiebung erfahren auch alle weiteren die Sollbahn definierenden Punkte. Allerdings geht die Verschiebung nicht für alle Punkte in die gleiche Richtung. Vielmehr wird die Regelung für jeden Punkt immer nur in dem Umfange wirksam, den die Projektion der Tasterauslenkung ($\vec{A}i$) auf die Normalenrichtung ($\vec{N}i$) des jeweiligen Punktes (Si) ergibt.

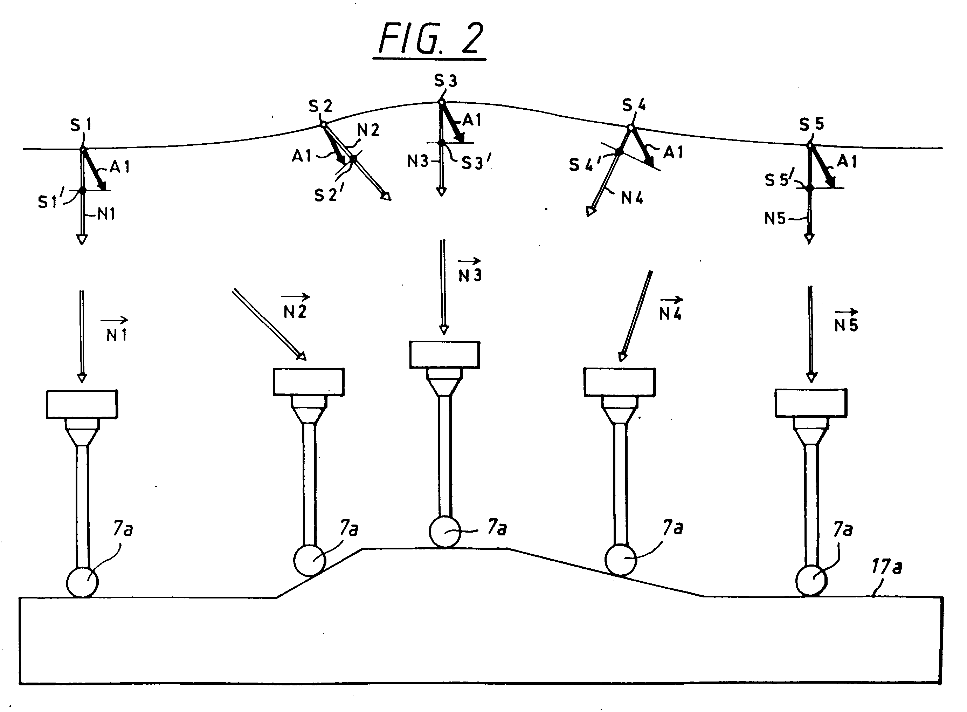

Dies ist anhand von Figur 2 verdeutlicht. Dort ist die reale Werkstückoberfläche mit (17a) bezeichnet und die Sollbahn, auf der die Tastkugel entlanggeführt wird, mit (S). Diese Sollbahn ist beispielsweise als Spline interpoliert worden zwischen den Punkten (S1, S2, S3, S4 und S5), die vom Rechner (4) zusammen mit den zugehörigen Normalenvektoren (N1, N2, N3, N4, N5) an die Steuerung übergeben wurden. Nehmen wir an, für den Punkt (S1) ergäbe sich eine Tasterauslenkung in Richtung des Pfeils (A1), weil beispielsweise die Istgeometrie der Werkstückoberfläche (17a) nicht mit den Solldaten übereinstimmt. Dann werden die Punkte (S2-S5) in der beschriebenen Weise durch Projektion auf den jeweiligen Normalenvektor, d.h. in Meßkraftrichtung verschoben und in die Punkte (S2'-S5') übergeführt. Der Versatz der Punkte entlang derer der Tastkopf im Zuge der Regelung gesteuert wird, erfolgt also immer senkrecht zur Werkstückoberfläche.

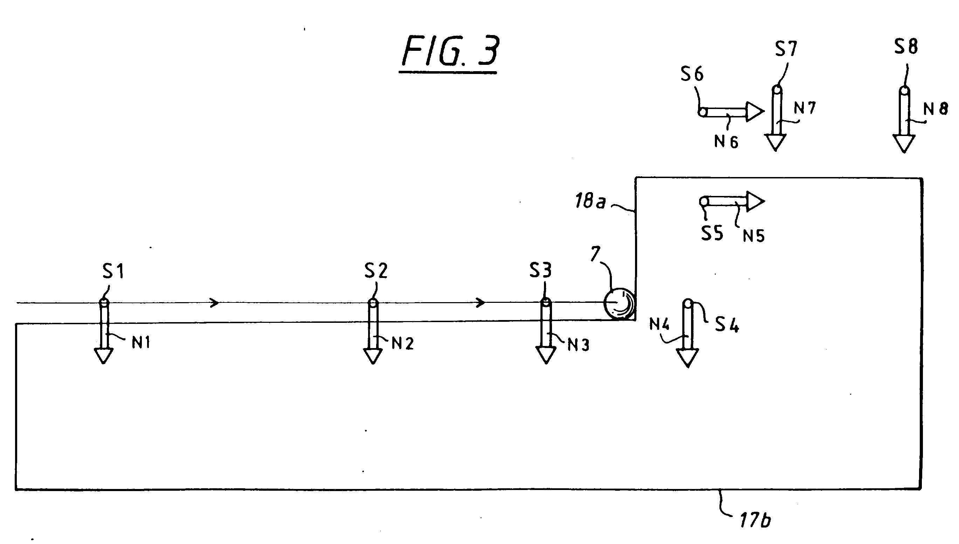

Ist der Werkstückfehler nicht in Richtung der angegebenen Flächennormale ausregelbar, weil z.B. die Antastrichtung in einem Inneneck infolge eines Form- oder Lagefehlers zu spät erkannt wird oder zu abrupt wechselt, tritt die zweite Stufe (28) der Regelung in Aktion. Diese zweite Stufe wird erst dann aktiv, wenn die Auslenkung ($\vec{A}i$) einen vorbestimmten Schwellwert überschreitet, oder wenn die Kräfte, die sich senkrecht zur Antast- bzw. Normalenrichtung zwischen Taststift und Werkstück aufbauen, zu groß werden. Die erstere Möglichkeit ist in Figur 1b skizziert. Dort wird in einem Komparator (29) verglichen, ob die von der Funktionsbaugruppe (19) gelieferte Information über die Tasterauslenkung ($\vec{A}i$) einen voreingestellten Schwellwert (30) überschreitet. Erst dann wird die zweite Stufe (28) der Regelung aktiv und bewirkt nun aber einen Versatz der Sollpunkte (Si) in Richtung der Tasterauslenkung ($\vec{A}i$) genauer gesagt in Richtung der Projektion der Tasterauslenkung ($\vec{A}i$) in die von dem momentanen Meßkraftvektor definierten Ebene (N⊥), auf der dieser senkrecht steht. Der Sinn und Zweck dieser zweiten Regelstufe wird anhand von Figur 3 deutlich. Das dort dargestellte Werkstück (17b) besitzt eine vorstehende Kante (18a), und die Punkte (S4 und S5) liegen hinter dieser Kante. Fährt nun der Taststift mit der Tastkugel (7) gegen diese Kante (18a), dann könnte die erste Regelstufe, die ja nur in Richtung der Flächennormalen z.B. des Punktes (S4) wirkt, diesen auf keinen Fall in Richtung auf die Werkstückoberfläche versetzen. Denn in dieser Situation ergibt sich plötzlich eine Tasterauslenkung senkrecht zur Meßkraftrichtung bzw. Normalenrichtung (N3). Trotz beginnender Auslenkung würde der Tastkopf also weiterfahren in Richtung auf den Punkt (S4) und der Taststift würde abbrechen.

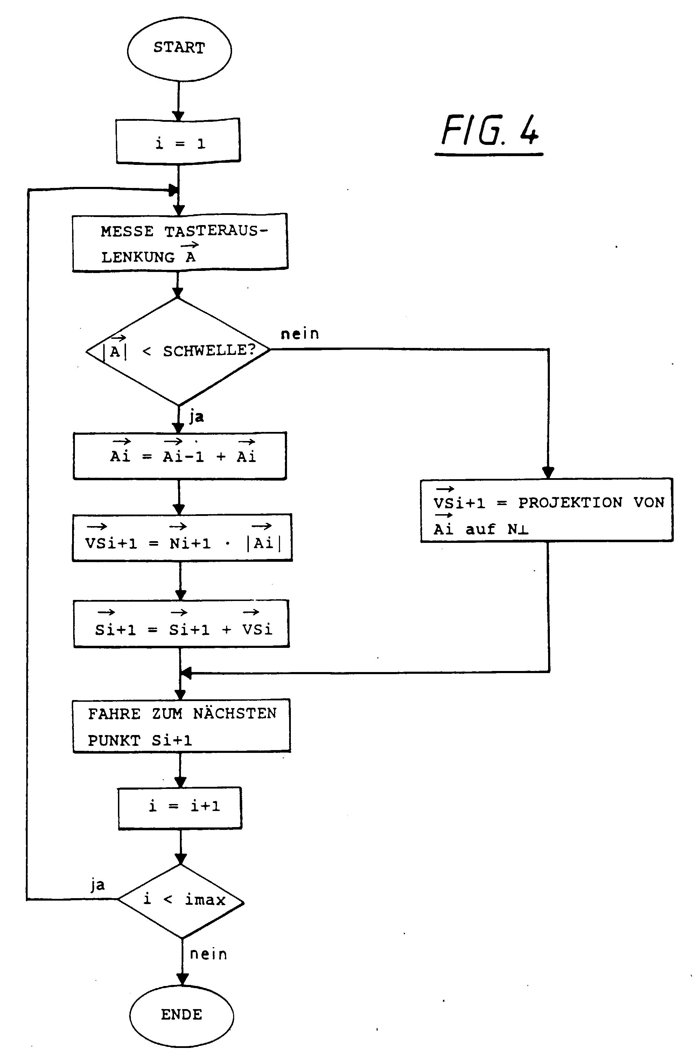

Die zweite Regelstufe sorgt jedoch dafür, daß in einem solchen Falle dann, wenn die Taststiftauslenkung einen vorbestimmten Betrag überschritten hat, der Punkt (S4) dennoch in Richtung auf die Kante (18a) aus dem Werkstück "herausgeschoben" wird. Sobald die Koordinaten des Punktes (S4) dann mit denen der Tastkugel (7) übereinstimmen, wechselt die Fahrtrichtung, da die Tastkugel dann in Richtung auf den Punkt (S5) in Bewegung gesetzt wird, und versucht diesen zu erreichen. Hierbei tritt die erste Stufe der Regelung wieder in Kraft, da dann die Normalenvektoren ($\vec{N}i$), die gleichzeitig die Richtung der aufgeschalteten Meßkraft ($\vec{F}$ soll) angeben, auch tatsächlich wieder auf die Werkstückoberfläche zu zeigen. Auf diese Weise hat sich dann der Tastkopf freigefahren. Im Flußdiagramm nach Fig. 4 ist die vorstehend beschriebene Regelung nochmals übersichtlich dargestellt.

Im beschriebenen Ausführungsbeispiel wurde als Kriterium für das Einsetzen der zweiten Regelstufe das Überschreiten eines vorgegebenen Schwellwerts für die Tasterauslenkung angesetzt. Alternativ ist es natürlich auch möglich, das Verhältnis der vorgegebenen Antastkraft (Fsoll) zur tatsächlichen Kraft zwischen Tastkugel und Werkstück bzw. den senkrecht zur vorgegebenen Sollrichtung wirkenden Kraftkomponenten (F⊥) als Kriterium für das Einsetzen der zweiten Regelstufe zu verwenden. Dieser Fall ist im Blockschaltbild nach Figur 1c skizziert. Die tatsächlich auftretenden Meßkräfte (F⊥) lassen sich beispielsweise über Meßwiderstände in den Stromkreisen der Tauchspulsysteme ermitteln, die die Antriebe (23) für die Auslenkung des Taststifts bilden.

Da der Regelvorgang der zweiten Regelstufe erst ab einem vorgegebenen Schwellwert aktiv wird und dann proportional der Kraft bzw. der Auslenkung die nächsten anzufahrenden Punkte in der Ebene verschiebt, auf der die Normalenvektoren der Punkte senkrecht stehen, ist das Freifahren aus der in Figur 4 skizzierten Situation immer dann gewährleistet, wenn die Fahrgeschwindigkeit nicht zu hoch im Verhältnis zur Regelgeschwindigkeit ist. Bei der Vorgabe der Stützpunkte besteht daher die Notwendigkeit, diese entsprechend der zu erwartenden Fehler des Werkstücks mehr oder weniger eng zu legen, damit einerseits die Regelung ihre Funktion als Schutzmechanismus ausfüllen kann, andererseits jedoch die Fahrgeschwindigkeit nicht zu langsam und die Gesamtmeßzeit damit nicht zu groß wird.

**Patentansprüche**

1. Koordinatenmeßgerät umfassend

   - einen Tastkopf mit einem auslenkbaren Taststift

   - einer Steuerung, die den Tastkopf (2) des Koordinatenmeßgeräts nach Solldaten auf einer vorgegebenen Bahn verfährt, die im wesentlichen der Sollgeometrie der zu vermessenden Werkstückoberfläche (17) entspricht, und eine Einrichtung zur Korrektur der Bahn besitzt

   dadurch gekennzeichnet, daß

   - die Einrichtung ein Regler mit mindestens zwei unterschiedlichen Regelstufen (27, 28) ist, der die Bahndaten gleichzeitig während der Abtastbewegung entsprechend einer Auslenkung des Taststifts modifiziert, wobei

   - die erste Regelstufe mit Mitteln zur Erfassung der Auslenkung des Taststifts verbunden ist, und auf ein der Auslenkung des beweglichen Taststifts proportionales Regelsignal arbeitet

   - die zweite Regelstufe mit Mitteln verbunden ist zur Erfassung der Auslenkung des Taststiftes oder der auf das Werkstück wirkenden Kraft und wobei diese zweite Regelstufe so ausgestaltet ist, daß diese zweite Regelstufe nur dann aktiv wird, wenn die Auslenkung des Taststiftes oder die auf das Werkstück wirkende Kraft einen vorbestimmten Betrag erreicht hat.

2. Koordinatenmeßgerät nach Anspruch 1, wobei die Solldaten sowohl Punkte (Si) umfassen, deren Koordinaten von der Steuerung angefahren werden, als auch vorgegebene Normalenvektoren ($\vec{N_i}$), die die Orientierung der Werkstückoberfläche beschreiben, und daß die erste Regelstufe (27) Mittel aufweist, die nur die in Richtung des jeweiligen Normalenvektors ($\vec{N_i}$) auftretende Regelabweichung ausregeln.

3. Koordinatenmeßgerät nach Anspruch 2, wobei der Tastkopf (2) Meßkraftgeneratoren (23) enthält und die Steuerung die wirkende Kraft (F) vektoriell stets in Richtung des jeweiligen vorgegebenen Normalenvektors ($\vec{N_i}$) aufschaltet.

4. Koordinatenmeßgerät nach einem der Ansprüche 1-3, wobei die zweite Regelstufe (28) Mittel aufweist, die die in Richtung der Auslenkung ($\vec{A_i}$) des Taststifts auftretende Regelabweichung ausregeln.

5. Koordinatenmeßgerät nach einem der Ansprüche 1-4, wobei die Regelung digital arbeitet derart, daß die Regelgröße ($\vec{VS}i$) des Reglers (26) die Lage von Punkten (Si) verschiebt, die die vom Tastkopf (2) abzufahrende Bahn beschreiben.

6. Koordinatenmeßgerät nach Anspruch 2 und 5, wobei die erste Regelstufe Mittel aufweist, die jeden Punkt (Si) stets nur in Richtung des ihm zugeordneten Normalenvektors ($\vec{N_i}$) verschieben, wobei das Ausmaß der Verschiebung der Summe der auf diesem Vektor ($\vec{N_i}$) projizierten Regelabweichungen entspricht.

7. Koordinatenmeßgerät nach Anspruch 5 und 6, wobei die zweite Regelstufe Mittel aufweist, die jeden Punkt (Si) stets nur senkrecht zum Normalenvektor des letzten abgefahrenen Punktes verschieben und zwar in Richtung der Projektion der Auslenkung ($\vec{A_i}$) das Taststifts auf die vom Normalenvektor ($\vec{N_i}$) definierte Ebene (N⊥).

**Claims**

1. Coordinate measuring instrument comprising

   - a probe with a deflectable feeler,

   - a controller which moves the probe (2) of the coordinate measuring instrument according to desired data on a prescribed path which corresponds substantially to the desired geometry of the workpiece surface (17) to be measured, and has a device for correcting the path,

   characterized in that

   - the device is a loop controller with at least two different control stages (27, 28), which loop controller modifies the path data simultaneously during the scanning movement in accordance with a deflection of the feeler,

- the first control stage being connected to means for detecting the deflection of the feeler and operating on a control signal proportional to the deflection of the moveable feeler,
- the second control stage being connected to means for detecting the deflection of the feeler or the force acting on the workpiece, and this second control stage being designed such that this second control stage becomes active only when the deflection of the feeler or the force acting on the workpiece has reached a predetermined absolute value.

2. Coordinate measuring instrument according to Claim 1, the desired data comprising both points (Si) whose coordinates are approached by the controller, and prescribed normal vectors ($\vec{Ni}$) which describe the orientation of the workpiece surface, and in that the first control stage (27) has means which correct only the system deviation occurring in the direction of the respective normal vector ( $\vec{Ni}$).

3. Coordinate measuring instrument according to Claim 2, in which the probe (2) contains measuring force generators (23), and the controller applies the acting force (F) vectorally always in a direction of the respective prescribed normal vector ($\vec{Ni}$).

4. Coordinate measuring instrument according to one of Claims 1-3, in which the second control stage (28) has means which correct the system deviation occurring in the direction of the deflection ($\vec{Ai}$) of the feeler.

5. Coordinate measuring instrument according to one of Claims 1-4, in which the closed-loop control operates digitally in such a way that the controlled variable ($\vec{VSi}$) of the loop controller (26) displaces the position of points (Si) which describe the path to be travelled by the probe (2).

6. Coordinate measuring instrument according to Claims 2 and 5, in which the first control stage has means which displace each point (Si) always only in the direction of the normal vector ($\vec{Ni}$) assigned to it, the extent of the displacement corresponding to the sum of the system deviations projected on this vector ($\vec{Ni}$).

7. Coordinate measuring instrument according to Claims 5 and 6, in which the second control stage has means which displace each point (Si) always only perpendicular to the normal vector of the last travelled point, specifically in a direction of the projection of the deflection ( $\vec{Ai}$) of the feeler onto the plane (N⊥) defined by the normal vector ($\vec{Ni}$).

**Revendications**

1. Appareil de mesure de coordonnées, comprenant :

   - une tête de palpeur pourvue d'une pointe de palpeur déviable,
   - une commande qui déplace la tête de palpeur (2) de l'appareil de mesure de coordonnées selon des données de consigne sur une trajectoire prédéterminée, qui correspond en substance à la géométrie de consigne de la surface (17) de la pièce à mesurer, et possède un dispositif pour la correction de la trajectoire,

   caractérisé en ce que :

   - le dispositif est un régulateur ayant au moins deux degrés de réglage différents (27, 28), qui modifie les données de trajectoire simultanément au cours du mouvement de balayage conformément à une déviation de la pointe de palpeur, dans lequel
   - le premier degré de réglage est lié à des moyens pour détecter la déviation de la pointe de palpeur, et fonctionne sur un signal de réglage proportionnel à la déviation de la pointe de palpeur mobile,
   - le second degré de réglage est lié à des moyens pour détecter la déviation de la pointe de palpeur ou la force agissant sur la pièce, ce second degré de réglage étant conçu de telle sorte que ce second degré de réglage ne soit actif que lorsque la déviation de la pointe de palpeur ou la force agissant sur la pièce a atteint une valeur prédéterminée.

2. Appareil de mesure de coordonnées selon la revendication 1, dans lequel les données de consigne comprennent non seulement des points (Si), dont les coordonnées sont introduites à partir de la commande, mais également des vecteurs de normale prédéterminés ( $\vec{Ni}$), qui décrivent l'orientation de la surface de la pièce, et dans lequel le premier degré de réglage (27) présente des moyens qui ne règlent que l'écart de réglage apparaissant dans la direction du vecteur de normale respectif ( $\vec{Ni}$).

3. Appareil de mesure de coordonnées selon la revendication 2, dans lequel la tête de palpeur (2) contient des générateurs de force de mesure (23) et la commande applique la force agissante (F) vectoriellement toujours dans la direction du vecteur de normale prédéterminé respectif ($\vec{Ni}$).

4. Appareil de mesure de coordonnées selon l'une quelconque des revendications 1-3, dans lequel le second degré de réglage (28) présente des moyens qui règlent l'écart de réglage apparaissant dans la direction de la déviation ($\vec{Ai}$) de la pointe de palpeur.

5.  Appareil de mesure de coordonnées selon l'une quelconque des revendications 1-4, dans lequel le réglage fonctionne en numérique de telle sorte que la grandeur de réglage ($\vec{VSi}$) du régulateur (26) déplace la position de points (Si) qui décrivent la trajectoire s'écartant de la tête de palpeur (2).

6.  Appareil de mesure de coordonnées selon les revendications 2 et 5, dans lequel le premier degré de réglage présente des moyens qui ne déplacent chaque point (Si) toujours que dans la direction du vecteur de normale ($\vec{Ni}$) qui lui est affecté, l'étendue du déplacement correspondant à la somme des écarts de réglage projetés sur ce vecteur ($\vec{Ni}$).

7.  Appareil de mesure de coordonnées selon les revendications 5 et 6, dans lequel le second degré de réglage comprend des moyens qui ne déplacent chaque point (Si) toujours que perpendiculairement au vecteur de normale du dernier point parcouru, c'est-à-dire dans la direction de la projection de la déviation ($\vec{Ai}$) de la pointe de palpeur sur le plan (N⊥) défini par le vecteur de normale ($\vec{Ni}$).

$\overrightarrow{Fsoll}$

$Pi(x,y,z),\overrightarrow{Ni}$

T

$\overrightarrow{m}$

Fsoll

10 EMPFANGS-SCHNITT-STELLE

TRANSFORM-STEUER-DATEN 11

Li

Si

13 ↓Takt LAGE D/A xs,ys,zs

ANTRIEBE 14 KMG

↓Takt

MESS-WERT 16

WEGMESSUNG 15

4

INTERPOL 12

↓Takt

REGLER 26

↓Takt ANA-LOG 19 A/D

MESS-WERT TAKO 18

$\overrightarrow{F}$soll

AN-TRIEBE TAKO 23

25 SENDE-SCHNITT-STELLE

xm,ym,zm

xT,yT,zT

2

7

17

y z x

y' z' x'

EP 0 762 247 B1

8

FIG.1a

EP 0 762 247 B1

## FIG. 1b

nach 12

$\overrightarrow{VS}i$

26

27

REGELUNG IN RICHTUNG $\overrightarrow{Ni}$

von 19

29

K

REGELUNG IN RICHTUNG TASTENAUSLENKUNG $\overrightarrow{Ai}$

28

30

SCHWELL-WERT

## FIG. 1c

nach 12

$\overrightarrow{VS}i$

126

127

REGELUNG IN RICHTUNG $\overrightarrow{Ni}$

von 19

REGELUNG IN RICHTUNG TASTENAUSLENKUNG $\overrightarrow{Ai}$

Fsoll

F⊥

128

9

## FIG. 2

FIG. 3

## FIG. 4

```
        ┌─────────┐
        │  START  │
        └────┬────┘
             │
        ┌────┴────┐
        │  i = 1  │
        └────┬────┘
             │
   ┌─────────┴─────────┐
   │  MESSE TASTERAUS- │
   │  LENKUNG A→       │
   └─────────┬─────────┘
             │
           ◇ |A→| < SCHWELLE? ──── nein ────┐
             │ ja                           │
   ┌─────────┴─────────┐                    │
   │  A→i = A→i-1 + A→i │                    │
   └─────────┬─────────┘         ┌──────────┴──────────────┐
             │                   │ VS→i+1 = PROJEKTION VON  │
   ┌─────────┴─────────┐         │ A→i auf N⊥              │
   │ VS→i+1 = N→i+1 · |A→i| │     └──────────┬──────────────┘
   └─────────┬─────────┘                    │
             │                              │
   ┌─────────┴─────────┐                    │
   │ S→i+1 = S→i+1 + VS→i │                  │
   └─────────┬─────────┘                    │
             ├──────────────────────────────┘
   ┌─────────┴─────────┐
   │ FAHRE ZUM NÄCHSTEN│
   │ PUNKT Si+1        │
   └─────────┬─────────┘
             │
        ┌────┴────┐
        │ i = i+1 │
        └────┬────┘
             │
      ja ──◇ i < imax
             │ nein
        ┌────┴────┐
        │  ENDE   │
        └─────────┘
```

$$\vec{A_i} = \vec{A_{i-1}} + \vec{A_i}$$

$$\vec{VS_{i+1}} = \vec{N_{i+1}} \cdot |\vec{A_i}|$$

$$\vec{S_{i+1}} = \vec{S_{i+1}} + \vec{VS_i}$$

$$\vec{VS_{i+1}} = \text{PROJEKTION VON } \vec{A_i} \text{ auf } N\perp$$